# FASCICULE DE BREVET EUROPEEN

(11) **EP 0 996 653 B1**
(45) Date de publication et mention de la délivrance du brevet: **28.03.2007**
(21) Numéro de dépôt: 98937593.6
(22) Date de dépôt: 09.07.1998
(51) Int. Cl.: C08G 14/08, C03C 25/10

(54) **RESINE PHENOLIQUE POUR COMPOSITION D'ENCOLLAGE, PROCEDE DE PREPARATION ET COMPOSITION D'ENCOLLAGE LA CONTENANT**
PHENOLHARZ FÜR EINE LEIMUNGSMITTELMISCHUNG, VERFAHREN ZU IHRER HERSTELLUNG UND DAMIT HERGESTELLTE LEIMUNGSMITTELMISCHUNG
PHENOLIC RESIN FOR GLUE SIZING COMPOSITION, PREPARATION METHOD AND GLUE SIZING COMPOSITION CONTAINING SAME

(30) Priorité: 15.07.1997 FR 9708936
(43) Date de publication de la demande: 03.05.2000
(60) Demande divisionnaire: 06126876.9
(73) Titulaire: SAINT-GOBAIN ISOVER, 92400 Courbevoie (FR)
(72) Inventeur: LERICQUE, Bernard, F-60290 Rantigny (FR); TETART, Serge, F-60740 Saint-Maximin (FR); LABBE, Claire, F-60100 Creil (FR); ESPIARD, Philippe, F-60270 Gouvieux (FR)
(74) Mandataire: Cardin, Elise
(86) Numéro de dépôt international: PCT/FR1998/001484
(87) Numéro de publication internationale: WO 1999/003906

(56) Documents cités:
- EP-A- 0 148 050
- FR-A- 2 051 990
- CHEMICAL ABSTRACTS, vol. 122, no. 16, 17 avril 1995 Columbus, Ohio, US; abstract no. 189229, PLOTKIN LEONID ET ALL: "Condensation polymerization for preparing water-soluble phenol-formaldehyde resins for impregnation." page 85; XP002056535 & SU 1 815 265 A (MOSSTROIPLASTMASS) 15 mai 1993

## Description

La présente invention est relative à une résine phénolique, destinée notamment à être utilisée dans une composition d'encollage pour matériau à base de laine minérale, notamment de produits isolants sous forme de feutre ou de voile.

La fabrication de produits à base de laine minérale comprend une première étape de fabrication de la laine elle-même, notamment par la technique connue de l'étirage centrifuge dans laquelle la matière minérale fondue est transformée en filaments, et une étape de mise en forme dans laquelle les filaments sont étirés et entraînés vers un organe récepteur par un courant gazeux ayant une vitesse et une température élevées, pour y former une nappe. Pour assurer la cohésion de la nappe, on projette sur la laine lors de son trajet vers l'organe récepteur, une composition, dite d'encollage, qui contient une résine thermodurcissable. La nappe ainsi traitée est ensuite soumise à un traitement thermique en étuve pour polycondenser la résine et obtenir un produit présentant des propriétés désirées, telles que stabilité dimensionnelle, résistance à la traction, reprise d'épaisseur après compression, couleur homogène.

Les compositions d'encollage sont généralement pulvérisées sur la laine minérale et sont préparées sous forme de composition aqueuse (solution, dispersion). Cette composition est en général préparée peu de temps avant pulvérisation, sur le site de production même, par addition des constituants usuels : un catalyseur de durcissement tel que du sulfate d'ammonium, de l'urée, et des adjuvants éventuels tels que huiles minérales lubrifiantes en tant qu'agent anti-poussière, ammoniaque, silanes en tant que promoteur d'adhérence, silicone en tant qu'hydrofugeant.

L'aptitude à la pulvérisation de telles compositions est conditionnée par la diluabilité à l'eau de la résine, que l'on définit généralement de la façon suivante : la diluabilité à l'eau d'une résine sous forme de composition aqueuse (résol) est le volume d'eau désionisée que l'on peut, à une température donnée, ajouter à l'unité de volume de cette composition avant de provoquer la formation d'un trouble permanent. La diluabilité à l'eau d'une résine apte à être utilisée dans une composition d'encollage pulvérisable est avantageusement de l'ordre d'au moins 1000 % à 20°C, c'est-à-dire que l'on peut diluer 10 ml de résine avec 10 x 10 ml d'eau ou plus sans que le mélange ne se trouble.

Il est souhaitable en outre que la résine soit stable au stockage pour permettre une utilisation au dernier moment : la diluabilité doit donc rester élevée pendant une période aussi longue que possible. Avantageusement, une résine présentera une diluabilité à l'eau, à 20°C, égale ou supérieure à 1000 % pendant au moins 8 jours.

La résine thermodurcissable utilisée est généralement un résol phénolique obtenu par condensation de phénol et de formaldéhyde, ou équivalents, en présence d'un catalyseur basique. Pour satisfaire l'exigence d'une forte diluabilité à l'eau, on limite le degré de condensation des monomères, pour éviter la formation de chaînes moléculaires longues, peu hydrophiles, qui réduisent la diluabilité.

A cet égard, on a coutume de terminer la réaction de condensation à un degré d'avancement où les chaînes moléculaires ne sont pas très longues, en procédant à la neutralisation du milieu réactionnel à un pH de l'ordre de 7 à 8 avec un acide fort tel que l'acide sulfurique, qui a pour effet de désactiver la catalyse basique. Le résol contient alors une certaine proportion de produits de départ, phénol et formaldéhyde, qui n'ont pas réagi.

D'autre part, pour limiter les risques de pollution atmosphérique lors de la mise en oeuvre de la composition d'encollage, il est souhaitable que la composition utilisée soit aussi exempte que possible de composés organiques volatils tels que les produits de départs non transformés, phénol et formaldéhyde libres, ou d'autres produits susceptibles de se former lors de la condensation des monomères, et qu'elle génère le moins possible de sous-produits polluants lors de la pulvérisation sur les filaments de température élevée et/ou du passage en étuve. Il serait possible en théorie de réduire la teneur en monomères, en particulier phénol libre et surtout en dérivés phénoliques volatils, en augmentant la durée et le degré de condensation des résines, mais on perdrait alors en diluabilité de la résine.

Le problème à la base de l'invention consiste à satisfaire au mieux ces deux exigences contradictoires.

Pour réduire le taux de phénol libre dans la résine, on propose généralement de préparer le résol phénolique en faisant réagir du phénol avec du formaldéhyde dans un rapport molaire formaldéhyde/phénol supérieur à 1 qui favorise la consommation du phénol, et d'ajouter ensuite de l'urée qui réagit avec l'excès de formaldéhyde. On obtient ainsi des résines formées de condensats formaldéhyde/phénol et urée/formaldéhyde. La résine peut être neutralisée avant ou après l'ajout d'urée, avec pour effet supplémentaire de déplacer l'équilibre de la réaction réversible entre l'urée et le formaldéhyde vers la formation du produit de condensation. On préfère généralement neutraliser la résine à un pH voisin de 7 pour éviter le relarguage de produits de départ polluants.

Le document EP-A-0 148 050 décrit la préparation selon cette technique de résines ayant une diluabilité à l'eau au moins égale à 1000 % et ayant une teneur en phénol libre (en poids par rapport au poids total de résine liquide) inférieure ou égale à 0,5 % et une teneur en formaldéhyde libre (en poids par rapport au poids total de résine liquide) inférieure ou égale à 3 %.

Dans le cas idéal, toute l'urée devrait être ajoutée au résol au moment de la fabrication de la résine pour simplifier la préparation sur site de la composition d'encollage. Toutefois, la modification du résol par l'urée peut conduire à un prédurcissement partiel de l'encollage et à des difficultés de manipulation en aval. C'est pourquoi on ne modifie que partiellement le résol qui contient toujours une certaine proportion de formaldéhyde, et on ajoute encore de l'urée à la composition d'encollage. Ces compositions d'encollage doivent néanmoins être utilisées assez rapidement car leur durée de conservation est relativement limitée.

EP-A-0 512 908 présente un moyen pour réduire le prédurcissement et augmenter la durée de conservation avant emploi d'un encollage préparé à partir d'un résol modifié de ce type. Il consiste à faire réagir le résol neutralisé avec deux réactifs azotés, à savoir de l'ammoniaque et de l'urée.

D'autres modifications des résines visant à améliorer d'autres propriétés de l'encollage sont également connues de l'art antérieur.

Ainsi, US-A-4 176 105 s'intéresse à la préparation d'un liant pour fibres minérales à base d'un résol phénolique de résistance thermique améliorée, capable de supporter une opération de durcissement thermique sans être sujet à la décomposition exothermique sans flamme (connue sous le terme anglais de « punking ») qui est ordinairement responsable de défauts de couleur des produits à base de fibres minérales. Il propose de préparer un prépolymère phénolique modifié de bas poids moléculaire en trois étapes consistant à combiner un condensat phénol-formaldéhyde de faible poids moléculaire consistant essentiellement en poly-hydroxyméthyl phénols, avec un composé du bore hydrosoluble tel que l'acide borique jusqu'à un pH acide de l'ordre de 2, puis à ajuster le pH du mélange à une valeur de l'ordre de 7 à 9 avec une base telle que l'hydroxyde d'ammonium, et enfin à ajouter un composé azoté difonctionnel tel que l'urée.

US-A-5 032 431 divulgue l'utilisation d'un borate hydrosoluble pour améliorer la résistance à l'humidité de compositions à base de résine phénolique durcies en milieu aicaiin utilisées dans la fabrication de matériaux isolants de couleur foncée à base de fibre de verre. Le borate, tel que du métaborate de lithium, de sodium ou de potassium, peut être simplement ajouté au résol phénolique alcalin de pH supérieur à 8,5 ou bien être fabriqué in situ par réaction d'acide borique avec l'hydroxyde alcalin adéquat en quantité suffisante pour que le pH de la composition reste supérieur à 8,5.

Si les résines et compositions d'encollage préparées de la façon exposée ci-dessus offrent un compromis assez satisfaisant entre la teneur en phénol et formaldéhyde libres et la diluabilité, il est toujours souhaitable d'améliorer ces performances. Le but de l'invention est de fournir une résine pour composition d'encollage qui présente une très faible teneur en composés organique volatils polluants, non seulement phénol et formaldéhyde, mais aussi dérivés organiques volatils tels que monométhylolphénols, qui soit diluable et de préférence stable au stockage pendant une durée au moins égale à celle des résines actuellement connues, et qui soit en outre de préparation aisée.

La présente invention repose sur la découverte inattendue qu'il est possible de préparer une composition résinique diluable et stable à partir d'un résol phénolique fortement condensé, dont la diluabilité en milieu basique peut être relativement faible, et qui précipite en général en milieu acide sulfurique. L'invention permet par conséquent de préparer des résines phénoliques peu polluantes par la voie consistant à pousser la réaction de condensation vers des produits de poids moléculaire élevé, en résolvant le problème de mise en oeuvre de la résine sur ligne de fabrication.

A cet égard l'invention a pour premier objet une composition résinique à base d'un résol phénol-formaldéhyde modifié par de l'urée ayant un rapport molaire formaldéhyde/phénol de l'ordre de 2 à 5, présentant un taux de formaldéhyde libre inférieur ou égal à 3 % (en poids par rapport au poids total de la composition), un taux de phénol libre inférieur ou égal à 0,5 % et une diluabilité mesurée à 20°C au moins égale à 1000 %, caractérisée en ce qu'elle renferme un résol surcondensé, obtenu par condensation en milieu basique de phénol, de formaldéhyde et éventuellement d'urée jusqu'à ce que le produit de condensation ait une diluabilité à l'eau à pH 9 inférieure ou égale à 2000 %, et inférieure à 500% après neutralisation par l'acide sulfurique, sous une forme neutralisée par l'acide borique ou un borate équivalent, par l'acide sulfamique ou un sulfamate équivalent, ou par un système comprenant un acide et un émulsifiant.

L'invention permet avantageusement de fournir des compositions résiniques stables, présentant une diluabilité à l'eau à 20°C supérieure ou égale à 1000 % pendant au moins 3 semaines de stockage à 12°C, même lorsqu'elles renferment un produit de neutralisation du résol surcondensé.

Dans la présente invention, les résols phénol-formaldéhyde peuvent être modifiés par l'urée de la façon connue, par réaction à chaud notamment comme décrit dans EP-A-0 148 050, ou à froid après une éventuelle période de repos à température ambiante du produit de condensation phénol-formaldéhyde.

Dans la présente description, le terme « résol surcondensé » désigne un résol caractérisé, à la fin de l'étape de condensation phénol-formaldéhyde et éventuellement urée, par une proportion relativement élevée de gros oligomères contenant au moins trois noyaux intercondensés, et par un poids moléculaire moyen élevé, par exemple mais de façon non limitative supérieur ou égal à 500. Ce résol est obtenu en augmentant la durée et/ou la température de réaction par rapport aux résines classiques, donc le degré de condensation, de façon à assurer une conversion quasi quantitative du phénol initial en dépassant le stade de la monocondensation en monométhylolphénols. Il contient donc une proportion très faible de phénol libre et composés phénoliques volatils susceptibles de polluer l'atmosphère du site d'utilisation.

La forte proportion d'espèces de haut poids moléculaire relativement hydrophobes dans le résol se traduit par une diluabilité relativement faible de la résine.

Le caractère surcondensé des résols utilisables selon l'invention est exprimé par la diluabilité du mélange basique (à pH environ 9) en fin de réaction entre phénol, formaldéhyde et éventuellement urée, qui est inférieure ou égale à 2000 %, pour un mélange réactionnel dont l'extrait sec est notamment de l'ordre de 40 à 60% en poids.

L'invention utilise avantageusement des résols très fortement condensés de diluabilité inférieure ou égale à 1500 %, ou encore à 1000 %, notamment de l'ordre de 400 à 900 %.

Avantageusement, l'invention permet d'atteindre un taux de phénol libre inférieur ou égal à 0,2 %, et même de 0,1 % ou moins.

En général, un résol surcondensé a une diluabilité très faible notamment inférieure à 500 %, voire nulle, lorsqu'il est neutralisé par l'acide sulfurique. On peut observer une précipitation dès que le pH atteint une valeur de l'ordre de 8 à 8,5.

Le résol est utilisé sous forme neutralisée dans la composition résinique, pour éviter que les condensats uréeformaldéhyde ne relarguent les monomères libres.

Dans une première variante, l'invention propose de neutraliser le résol avec de l'acide borique ou un borate équivalent, notamment borate d'ammonium, métaborate de sodium, tétraborate de sodium, polyborates d'aminoalcool... Il a en effet été découvert par les inventeurs que, de façon surprenante, l'acide borique, utilisé comme agent neutralisant d'un résol phénolique surcondensé modifie le résol de telle façon que sa diluabilité est plus élevée dans le milieu neutralisé ainsi obtenu que dans un milieu obtenu avec de l'acide sulfurique. Le produit de neutralisation par l'acide borique d'un tel résol a en général une diluabilité à 20°C au moins égale à 1000 %, très souvent de l'ordre de 2000 % ou plus.

Sans vouloir être lié par une quelconque théorie scientifique, on suppose que l'acide borique forme avec les condensats phénol-formaldéhyde des complexes borates polaires qui impartissent aux chaînes moléculaires un caractère hydrophile fort favorisant la solubilité en milieu aqueux.

Dans un mode de réalisation préféré, la composition résinique à base de résol neutralisé à l'acide borique est sensiblement neutre, avec un pH de l'ordre de 7 à 8.

Toutefois, elle peut aussi être basique, avec un pH par exemple de l'ordre de 8 à 10, notamment de 8,5 à 10, lorsque la neutralisation du résol est effectuée avec de l'acide borique en solution alcaline, notamment ammoniacale. De façon surprenante, on a constaté que le résol fortement condensé modifié par l'acide borique est stable en milieu basique.

Toutes ces compositions, quel que soit leur pH, renfermant un produit de neutralisation par l'acide borique, présentent une diluabilité à l'eau à 20°C supérieure ou égale à 1000 % pendant au moins 3 semaines de stockage à 12°C.

Dans une deuxième variante, l'invention propose de neutraliser le résol avec de l'acide sulfamique ou un sulfamate équivalent. Il a également été découvert par les inventeurs de façon surprenante que l'acide sulfamique, utilisé comme agent neutralisant d'un résol phénolique surcondensé modifie le résol de telle façon que sa diluabilité est plus élevée dans le milieu neutralisé ainsi obtenu que dans le milieu obtenu avec l'acide sulfurique. Le produit de neutralisation par l'acide sulfamique d'un tel résol a en général une diluabilité à 20°C au moins égale à 1000 %, très souvent de l'ordre de 2000 % ou plus.

La composition résinique à base de résol neutralisé à l'acide sulfamique est en général sensiblement neutre, avec un pH de l'ordre de 7 à 8.

Elle présente une diluabilité à l'eau à 20°C supérieure ou égale à 1000 % pendant au moins 3 semaines de stockage à 12°C.

Dans une autre variante, la composition résinique renferme un produit de neutralisation avec un acide quelconque mais renferme également un émulsifiant tel qu'une gomme et/ou un tensioactif anionique, notamment les gommes guar et ghatti, ou éventuellement de la caséine.

De préférence, lorsque l'on utilise les acides forts courants, le produit de neutralisation du résol est obtenu en présence de l'émulsifiant.

L'acide utilisé peut être choisi parmi tous les acides forts connus en soi tels que l'acide sulfurique, l'acide chlorhydrique, mais aussi l'acide borique ou un borate, l'acide sulfamique ou un sulfamate.

La composition a avantageusement un pH de l'ordre de 7 à 8, notamment 7,2 à 7,6.

Elle se présente sous la forme d'une émulsion. La quantité d'émulsifiant utilisée dépend de sa nature et est déterminée aisément par l'homme du métier. A titre indicatif, cette quantité peut être de 1 à 10 parties en poids d'émulsifiant pour 100 parties en poids de matière sèche dans le résol.

Comme dans les variantes précédentes, une telle composition est stable et garde une diluabilité mesurée à 20 °C d'au moins 1000 % après 3 semaines de stockage à 12 °C.

Dans un autre mode de réalisation, on ne neutralise pas le résol juste après sa préparation. En effet, comme on cherche à atteindre un degré de condensation le plus élevé possible, pour limiter les émissions de polluants, il n'y a pas un besoin absolu de désactiver rapidement le catalyseur basique. Dans ce mode de réalisation, la composition résinique selon l'invention renferme un résol phénol-formaldéhyde-urée non neutralisé. Le pH d'une telle composition est généralement de l'ordre de 8,5 à 10.

L'invention a donc en particulier pour objet une composition résinique renfermant un résol surcondensé dont la diluabilité à pH 9 est inférieure ou égale à 2000 %, notamment de l'ordre de 1000 à 2000%, non neutralisé pour mélange extemporané avec un réactif de neutralisation.

Cette composition est stable au stockage et utilisable en tant que prémélange pouvant être complété au dernier moment sur le site d'utilisation par mélange extemporané avec les ingrédients nécessaires à la formulation de l'encollage.

Parmi ces ingrédients, on ajoutera notamment un réactif de neutralisation, car il est bien sûr toujours souhaitable dans un but anti-pollution que la résine au moment de l'application de l'encollage et/ou du passage en étuve soit sous forme neutralisée.

Ce réactif de neutralisation est choisi parmi l'acide borique ou un borate équivalent, l'acide sulfamique ou un sulfamate équivalent, et un système comprenant un émulsifiant et un acide, comme décrit précédemment.

L'invention a également pour objet un procédé de préparation d'une composition résinique telle que ci-dessus. Ce procédé comprend une étape caractéristique de surcondensation consistant à faire réagir en milieu basique du phénol, du formaldéhyde et éventuellement de l'urée jusqu'à ce que le produit ait une diluabilité à l'eau à pH 9 inférieure ou égale à 2000 %, notamment 1500 %, voire 1000 %, suivie d'une étape de neutralisation.

Le pH initial (avant neutralisation) du résol obtenu en milieu basique est généralement de l'ordre de 8,5 à 10, notamment de 9 à 9,5.

Dans l'étape de surcondensation, on fait réagir du phénol et du formaldéhyde en présence d'un catalyseur basique, le rapport formaldéhyde/phénol étant de l'ordre de 2 à 5, de préférence de 2,5 à 4, notamment de 2,8 à 3,6. Le catalyseur basique connu en soi, notamment la soude, la potasse, la chaux ou la baryte, ou un catalyseur amine, est en général utilisé en quantité correspondant à 6 à 20 mol d'équivalents hydroxyle OH- pour 100 mol de phénol initial.

Avantageusement, cette réaction est conduite jusqu'à l'obtention d'un taux de conversion du phénol égal ou supérieur à 98 %, de préférence à 99 %, tout particulièrement de l'ordre d'au moins 99,3 à 99,5 %.

Dans une première variante, on met les monomères en présence avec un catalyseur de polymérisation basique de préférence à une température comprise entre 20 et 60°C environ, et on les amène à une température de réaction comprise entre 50 et 80°C environ, de préférence à 70°C environ, jusqu'au taux de conversion désiré. Avantageusement, on maintient cette température de réaction pendant 100 à 200 minutes, de préférence de 130 à 160 minutes environ. Ce chauffage prolongé permet d'atteindre la surcondensation de la résine avec formation d'espèces de haut poids moléculaire renfermant une plus grande proportion de gros oligomères contenant trois noyaux phénoliques intercondensés et plus. On refroidit ensuite le mélange à une température de 20 à 30°C.

Dans une seconde variante, on met les monomères en présence avec un catalyseur de polymérisation basique de préférence à une température comprise entre 20 et 60°C environ, et on les amène à une première température de réaction comprise entre 50 et 80°C environ, de préférence de 70°C environ, puis on élève la température du mélange à une deuxième température de réaction comprise entre 70 et 90°C, de préférence à 85°C, jusqu'au taux de conversion désiré. Ce deuxième palier de chauffage est destiné à réaliser une surcondensation de la résine avec formation d'espèces de haut poids moléculaire renfermant une plus grande proportion de gros oligomères contenant trois noyaux phénoliques intercondensés et plus.

Avantageusement, la durée de la réaction à la première température est de 50 à 80 minutes, et la durée de la réaction à la deuxième température est de 30 à 60 minutes. On refroidit ensuite le mélange à une température de 20 à 30°C.

De manière générale, un ou plusieurs des monomères de condensation peuvent aussi être introduits de façon continue dans le mélange réactionnel.

La préparation de la composition résinique selon l'invention comprend en outre la modification du résol par de l'urée. Dans une première forme de modification, l'urée est amenée à se condenser avec les monomères du mélange réactionnel à chaud. Avantageusement, l'urée est introduite dans le milieu réactionnel au cours de la phase de refroidissement, notamment dès le début du refroidissement. Elle peut également être ajoutée après refroidissement complet du mélange réactionnel, éventuellement après une certaine période de stockage à température ambiante ou inférieure. Elle peut encore être ajoutée, de préférence à froid, après l'étape de neutralisation.

L'étape de neutralisation peut avoir lieu juste après l'étape de surcondensation (sur le mélange refroidi), ou bien après une étape de stockage pendant une période déterminée suivant l'étape de surcondensation. Elle peut notamment avoir lieu juste avant la formulation de l'encollage.

Elle consiste à ajouter un acide au mélange réactionnel refroidi à température ambiante en quantité suffisante pour abaisser le pH a une valeur de 7 à 8. L'acide est avantageusement introduit à raison de 0,88 à 0,92 mol d'acide par mol d'équivalents hydroxyle OH⁻ apportés par le catalyseur basique.

Dans le cas de l'acide borique, on utilise de préférence l'acide borique en solution aqueuse titrant de préférence de 3 à 20 % en poids d'acide borique. Les solutions à fort titre en acide borique renferment en général une base, telle que l'ammoniaque, destinée à augmenter la solubilité de l'acide borique. La quantité d'acide borique à introduire est toujours calculée pour neutraliser le catalyseur basique, mais le pH final est alors plus élevé, de l'ordre de 8,5 à 10.

Dans le cas de l'acide sulfamique, on utilise avantageusement l'acide sulfamique en solution aqueuse titrant de préférence de 10 à 20 % en poids d'acide sulfamique ou d'un sulfamate. On peut aussi utiliser l'acide sulfamique ou sulfamate sous forme solide à dissoudre dans le résol.

Au terme de la neutralisation à l'acide borique ou sulfamique, le résol voit sa diluabilité à l'eau augmentée par rapport à celle dans le milieu basique initial. Cet effet avantageux n'est du reste pas limité à la neutralisation d'un résol surcondensé, mais peut être observé de manière générale avec toute résine phénolique conventionnelle. Si avec ces résines, il est difficile d'observer l'augmentation de diluabilité lorsqu'on passe du milieu basique au milieu acide, parce que la diluabilité initiale est déjà élevée, la neutralisation à l'acide borique ou sulfamique a pour effet d'augmenter la stabilité dans le temps de la résine. Lorsque le résol est neutralisé par l'un de ces acides, la composition résinique garde plus longtemps un niveau de diluabilité désiré que lorsque le résol est neutralisé par l'acide sulfurique.

A cet égard, l'invention a également pour objet un procédé pour améliorer la diluabilité d'un résol phénolique, notamment d'un résol de diluabilité à l'eau à pH 9 inférieure ou égale à 2000 %, caractérisé en ce qu'il comprend une étape consistant à neutraliser le résol avec de l'acide borique (ou borate équivalent) ou sulfamique (ou sulfamate équivalent).

Dans un autre mode de réalisation, on ajoute à la fois un acide et un émulsifiant au cours de l'étape de neutralisation. De préférence, lorsqu'il s'agit d'un acide fort traditionnel, on ajoute d'abord l'émulsifiant notamment en solution aqueuse, puis l'acide pour réaliser la neutralisation en présence de l'émulsifiant.

Les compositions résiniques diluables et stables selon l'invention peuvent être utilisées avantageusement dans une composition d'encollage pour produit à base de laine minérale, peu polluante, ayant en outre une aptitude à la pulvérisation élevée.

L'invention a encore pour objet une composition d'encollage pour produit à base de laine minérale, comprenant une composition résinique telle que décrite ci-dessus, éventuellement de l'urée supplémentaire et éventuellement des additifs d'encollage, les proportions pondérales de la résine et de l'urée étant de préférence de 50:50 à 90:10.

D'une manière générale, une composition typique d'encollage peut comprendre les additifs suivants, pour 100 parties en poids de matière sèche de résine et d'urée :

| | |
|---|---|
| sulfate d'ammonium | 0 à 5, avantageusement 3 |
| silane, notamment aminosilane | 0 à 2 |
| huile minérale | 0 à 20 |
| ammoniaque à 20 % | 0 à 20, avantageusement 3 à 12 |

De l'ammoniaque peut être introduit dans la composition résinique à chaud en cours de synthèse, ou bien à froid en prémélange après condensation, ou bien lors de la formulation de l'encollage, ou encore à plusieurs stades de la fabrication de la composition.

D'autres avantages et particularités de l'invention ressortiront des exemples suivants, non limitatifs.

### EXEMPLE 1

Cet exemple illustre la neutralisation par l'acide borique d'un résol surcondensé.

Dans un réacteur agité et chauffé à 45°C, on introduit 66,2 kg de phénol (703 mol) et 159,7 kg d'une solution aqueuse à 37 % en poids de formaldéhyde. Ceci correspond à un rapport moléculaire formaldéhyde/phénol = 2,8.

Tout en maintenant la température à 45°C, on ajoute en 30 minutes, fraction par fraction, 7,03 kg d'hydroxyde de sodium en solution à 47 % (soit 82,6 mol de NaOH).

A la fin de l'addition de la soude, on augmente la température du mélange à 70°C en 30 minutes. On maintient l'agitation à cette température durant 60 minutes.

On augmente alors la température du mélange à 85°C en 15 minutes et on maintient cette température durant 45 minutes. Ce deuxième palier de chauffage est destiné à réaliser une surcondensation de la résine avec formation d'espèce de haut poids moléculaire renfermant une plus grande proportion de gros oligomères contenant trois noyaux phénoliques intercondensés et plus. Le taux de transformation du phénol à l'issue de cette surcondensation est de 99,3 %.

On commence alors à refroidir le réacteur et on ajoute en même temps 24,6 kg d'urée en grains, sur une durée de 20 minutes. La température est alors de 60°C et on poursuit le refroidissement en 40 minutes jusqu'à 25°C.

Le résol obtenu a un pH de 9,2 et une diluabilité à l'eau à ce pH de 800 %.

On neutralise alors le résol avec 154 kg d'une solution d'acide borique à 3 % dans l'eau (soit 74,8 mol de H₃BO₃).

On obtient finalement un résol de pH 7,2, contenant 30,4 % en poids de matière sèche, moins de 0,5 % en poids de formol libre en poids par rapport au poids total de résol modifié, et 0,1 % de phénol libre. Sa diluabilité est supérieure à 2000 % et le reste après 3 semaines de stockage à 12°C.

Par comparaison, le même résol modifié par l'urée mais neutralisé par l'acide sulfurique à 25 % précipite quand le pH devient inférieur à 8,6.

### EXEMPLE 2

Dans cet exemple on prépare un résol phénolique encore plus condensé en poussant plus loin la deuxième étape de chauffage.

Dans le même type de réacteur agité et chauffé à 45°C, on introduit 54,07 kg de phénol (575 mol) et 162,85 kg d'une solution aqueuse à 37 % en poids de formaldéhyde. Ceci correspond à un rapport moléculaire formaldéhyde/phénol = 3,5.

Tout en maintenant la température à 45°C, on ajoute en 30 minutes, fraction par fraction, 5,76 kg d'hydroxyde de sodium en solution à 47 % (soit 67,7 mol de NaOH).

A la fin de l'addition de la soude, on augmente la température du mélange à 70°C en 30 minutes. On maintient l'agitation à cette température durant 60 minutes.

On augmente alors la température du mélange à 85°C en 15 minutes et on maintient cette température durant 50 minutes. Le taux de transformation du phénol à l'issue de cette surcondensation est de 99,63 %.

On commence alors à refroidir le réacteur et on ajoute en même temps 54,1 kg d'urée en grains, sur une durée de 20 minutes. La température est alors de 60°C et on poursuit le refroidissement en 40 minutes jusqu'à 25°C.

Le résol obtenu a un pH de 9,3 et une diluabilité à l'eau à ce pH de 700 %.

On neutralise alors le résol avec 123,5 kg d'une solution d'acide borique à 3 % dans l'eau (soit 59,9 mol de H₃BO₃).

On obtient finalement un résol de pH 7,2, contenant 34,3 % en poids de matière sèche, moins de 0,5 % en poids de formol libre en poids par rapport au poids total de résol modifié, et 0,05 % de phénol libre. Sa diluabilité est supérieure à 2000 % et le reste après 3 semaines de stockage à 12°C.

Par comparaison, le même résol modifié par l'urée mais neutralisé par l'acide sulfurique à 25 % précipite quand le pH devient inférieur à 8,6.

### EXEMPLE 3

Dans cet exemple, on augmente le degré de condensation de la résine en réalisant un chauffage prolongé des monomères à une seule température.

Dans un réacteur agité et chauffé à 45°C, on introduit 42,37 kg de phénol (451 mol) et 127,29 kg d'une solution aqueuse à 37 % en poids de formaldéhyde. Ceci correspond à un rapport moléculaire formaldéhyde/phénol = 3,5.

Tout en maintenant la température à 45°C, on ajoute en 30 minutes, fraction par fraction, 5,35 kg d'hydroxyde de sodium en solution à 47 % (soit 62,8 mol de NaOH).

A la fin de l'addition de la soude, on augmente la température du mélange à 70°C en 30 minutes. On maintient l'agitation à cette température durant 140 minutes.

Le taux de transformation du phénol à l'issue de cette surcondensation est de 99,44 %.

On commence alors à refroidir le réacteur et on ajoute en même temps 44 kg d'urée en grains, sur une durée de 25 minutes. La température est alors de 45°C et on poursuit le refroidissement en 15 minutes jusqu'à 30°C.

Le résol obtenu a un pH de 9,3 et une diluabilité à l'eau à ce pH de 2000 %.

On neutralise alors le résol à 30°C avec 17,65 kg d'une solution d'acide borique à 20 % en milieu ammoniacal, préparée en ajoutant 3,53 kg d'acide borique pur à 11,76 kg d'eau à 20°C, puis en ajoutant peu à peu 2,36 kg de solution d'ammoniaque à 17 %. La quantité de H₃BO₃ introduite est donc de 57,1 mol, correspondant à la quantité nécessaire pour neutraliser la même quantité de soude initiale en amenant le pH à 7,2 (sans ajout d'ammoniaque).

On refroidit ensuite à 25°C en 15 minutes.

On obtient finalement un résol de pH 8,7, contenant 46,4 % en poids de matière sèche, moins de 0,5 % en poids de formol libre en poids par rapport au poids total de résol modifié, et 0,1 % de phénol libre. Sa diluabilité est supérieure à 2000 % et reste supérieure à 1000 % après 3 semaines de stockage à 12°C.

Par comparaison, le même résol modifié par l'urée mais neutralisé par l'acide sulfurique à 25 % a une diluabilité très faible inférieure à 500 %.

### EXEMPLES D'APPLICATION

Les résols des exemples 1 à 3 sont utilisés pour préparer des compositions d'encollage par dilution avec 6 volumes d'eau et ajout éventuel de silane et d'huile. Les compositions d'encollage sont utilisées pour fabriquer des matelas de laine de verre dans les conditions connues de l'homme de l'art. L'encollage est pulvérisé sur les filaments de verre chauds à raison de 4 % en poids d'encollage par rapport au poids de verre, et la nappe recueillie sur un tapis récepteur est passée en étuve à 280°C. On mesure les émissions de polluants cumulées au niveau du dispositif de réception de la laine encollée et au niveau de l'étuve en prélevant des échantillons des atmosphères correspondantes au moyen de barboteurs. La teneur en phénol de l'échantillon est mesurée par chromatographie en phase gazeuse ; la teneur en phénol total (tous dérivés phénoliques volatils), en formaldéhyde et en ammoniaque est mesurée par colorimétrie ; et la teneur en composés organiques volatils est mesurée au moyen d'un COTmètre. Les résultats, exprimés en kg de polluant par tonne de verre, sont consignés dans le tableau 1 ci-après.

### EXEMPLE COMPARATIF 1

Pour comparaison, on indique aussi dans ce tableau les émissions de polluants avec une résine de l'art antérieur du type phénol-formaldéhyde-urée ayant un rapport formaldéhyde/phénol ≥ 4 et une teneur en phénol libre de 0,15 %. En fin de préparation, la résine modifiée à l'urée a une diluabilité à pH 9 supérieure à 2000 %. L'encollage est préparé et appliqué comme dans les exemples d'application selon l'invention.

**TABLEAU 1**

| | **EX. 1** | **EX. 2** | **EX. 3** | **EX. COMP. 1** |
|---|---|---|---|---|
| phénol libre | 0,21 | 0,04 | 0,14 | 0,15 |
| phénol total | 0,56 | 0,23 | 0,45 | 0,82 |
| formaldéhyde | 0,71 | 0,97 | 0,76 | 0,81 |
| ammoniaque | 0,88 | 1,52 | 1,77 | 1,8 |
| **tous composés organiques volatils** | **2,34** | **2,45** | **2,65** | **3,58** |

Avec les résols des exemples 1 à 3, l'émission totale de composés organiques volatils est réduite d'environ 30 % par rapport à la résine de l'art antérieur. On note en particulier une réduction remarquable de l'émission de dérivés phénoliques volatils (en particulier phénol et monométhylolphénols) et aussi du formaldéhyde, ainsi que de l'ammoniaque.

### EXEMPLE COMPARATIF 2

A des fins de comparaison, on a reproduit l'exemple 1 du document EP-A-148 050, dans lequel la condensation des monomères n'est pas poussée jusqu'au stade de la surcondensation.

On a donc fait réagir du formaldéhyde en solution aqueuse à 37%, avec du phénol dans un rapport molaire de 3,5 à la température de 45°C sous agitation. On a introduit régulièrement en 30 minutes, à 45°C, une solution aqueuse à 50% de soude à raison de 6% en poids du phénol initial, puis on a élevé la température de façon régulière de 45 à 70°C en 30 minutes et on l'a maintenue à 70 °C pendant 71 minutes.

En refroidissant ie mélange régulièrement de 70 à 50 °C en 20 minutes, on a introduit de l'urée dans un rapport molaire au phénol de 1,18. On a continué de refroidir à la même vitesse à 35°C.

On a alors neutralisé le résol à l'acide sulfurique pour atteindre un pH de l'ordre de 7,5. La diluabilité du résol ainsi neutralisé est de 2000 %, signe que l'on est loin de l'état de surcondensation.

Comme le montre le tableau 2 suivant, la diluabilité de cette composition s'effondre après 2 semaines de stockage.

**TABLEAU 2**

| | Diluabilité à 20°C de la composition résinique | | |
|---|---|---|---|
| | EX. COMP. 2 | EX 3 | Résine de l'ex. 3 |
| Durée de stockage | | neutralisation à | neutralisée à |
| à 12 °C (jours) | | l'acide borique | l'acide sulfurique |
| 0 | 2000 % | 2000 % | 300 % |
| 4 | 2000 % | 2000 % | 200 % |
| 8 | 1700 % | 1800 % | 100 % |
| 12 | 1400 % | 1700 % | - |
| 18 | 100 % | 1550 % | - |

### EXEMPLE 4

Cet exemple illustre la neutralisation d'un résol surcondensé par l'acide sulfamique.

Dans un réacteur agité et chauffé à 45°C, on introduit 193 kg de phénol et 531 kg d'une solution aqueuse à 37 % en poids de formaldéhyde. Ceci correspond à un rapport moléculaire formaldéhyde/phénol = 2.5.

Tout en maintenant la température à 45°C, on ajoute en 30 minutes, fraction par fraction, 24,2 kg d'hydroxyde de sodium en solution à 48 % .

A la fin de l'addition de la soude, on augmente la température du mélange à 70°C en 30 minutes. On maintient l'agitation à cette température durant 150 minutes.

Après refroidissement à 25°C, le résol obtenu a un pH de 9,1 et une diluabilité à l'eau à ce pH de 2000 %.

On neutralise ce résol en le faisant réagir avec 177 kg d'une solution aqueuse à 15 % d'acide sulfamique. Juste après la fin de l'ajout de l'acide sulfamique, la diluabilité à 20°C du résol neutralisé est de 600 % seulement, mais elle remonte au-dessus de 1000 % après 24 heures à la température ambiante. Il semblerait qu'au cours de ces premières 24 heures l'acide sulfamique continue de réagir avec le résol.

On obtient finalement un résol de pH 7,2, contenant 37,4 % en poids de matière sèche, 4 % en poids de formol libre en poids par rapport au poids total de résol (non modifié), et 0,18 % de phénol libre, dont la diluabilité reste supérieure à 1000 % après 3 semaines de stockage à 12°C.

A partir de ce résol, on peut préparer en fonction des besoins une composition utilisable en tant que prémélange pour formulation d'un encollage. Cette préparation a lieu de préférence environ 24 heures avant la formulation de l'encollage pour utilisation immédiate de ce dernier.

On prépare ce prémélange à température ambiante en ajoutant 40 parties en poids d'urée pour 60 parties en poids de résol neutralisé. A la suite de cette modification à froid par l'urée, la composition résinique contient moins de 0,5 % en poids de formaldéhyde libre.

On utilise ce prémélange pour préparer une composition d'encollage suivant la formulation suivante :

| | |
|---|---|
| prémélange | 100 parties en poids |
| sulfate d'ammonium | 1 |
| ammoniac | 3 |

On mesure, dans les conditions indiquées ci-dessus dans les exemples d'application, les émissions de polluants cumulées sur la ligne de fabrication de matelas de laine de verre (en kg de polluant par tonne de verre) :

| | |
|---|---|
| phénol libre | 0,19 |
| phénol total | 0,86 |
| formaldéhyde | 0,47 |
| ammoniac | 1,9 |
| **COT** | **2,35** |

Cet exemple montre que ce résol libère une quantité très réduite de composés organiques volatils en général.

### EXEMPLE 5

Cet exemple illustre la neutralisation d'un résol surcondensé par l'acide sulfurique en présence d'un émulsifiant.

Dans un réacteur agité et chauffé à 45°C, on introduit 61,9 kg de phénol (658 mol) et 149,6 kg d'une solution aqueuse à 37 % en poids de formaldéhyde. Ceci correspond à un rapport moléculaire formaldéhyde/phénol = 2,8.

Tout en maintenant la température à 45°C, on ajoute en 30 minutes, fraction par fraction, 6,5 kg d'hydroxyde de sodium en solution à 47 % (soit 76,4 mol de NaOH).

A la fin de l'addition de la soude, on augmente la température du mélange à 70°C en 30 minutes. On maintient l'agitation à cette température durant 60 minutes.

On augmente alors la température du mélange à 85°C en 15 minutes et on maintient cette température durant 45 minutes. Le taux de transformation du phénol à l'issue de cette surcondensation est de 99,3 %.

On commence alors à refroidir le réacteur et on ajoute en même temps 16,3 kg d'urée en grains, sur une durée de 30 minutes. La température est alors de 60°C et on poursuit le refroidissement en 40 minutes jusqu'à 25°C.

Le résol obtenu a un pH de 9,3 et une diluabilité à l'eau à ce pH de 800 % (extrait sec : 46,8 %).

On ajoute, sous agitation, 150 kg d'une solution à 2,6 % de gommes dans l'eau (1,3 kg de gomme Guar + 2,6 kg de gomme Ghatti dilués en pluie dans la quantité d'eau nécessaire pour obtenir 2,6 % de matière sèche).

On neutralise la résine à pH 7,2 par addition d'acide sulfurique à 25%, toujours sous agitation.

Il se forme in situ une émulsion stable, qui a une diluabilité d'au moins 1000 % pendant 3 semaines.

## Revendications

1. Composition résinique à base d'un résol phénol-formaldéhyde modifié par de l'urée ayant un rapport formaldéhyde/phénol de 2 à 5, présentant un taux de formaldéhyde libre inférieur ou égal à 3 % (en poids par rapport au poids total de la composition), un taux de phénol libre inférieur ou égal à 0,5 % et une diluabilité mesurée à 20°C au moins égale à 1000 %, **caractérisée en ce qu'**elle renferme un résol surcondensé, c'est-à-dire obtenu par condensation en milieu basique de phénol et de formaldéhyde et éventuellement d'urée jusqu'à ce que le produit ait une diluabilité à l'eau à une température de 20 °C inférieure ou égale à 2000 % à pH environ 9, et inférieure à 500 % après neutralisation par l'acide sulfurique, sous une forme neutralisée par l'acide borique ou un borate équivalent, par l'acide sulfamique ou un sulfamate équivalent, ou par un système comprenant un acide et un émulsifiant.

2. Composition selon la revendication 1, **caractérisée en ce qu'**elle garde une diluabilité à 20°C d'au moins 1000 % après 3 semaines de stockage à 12 °C.

3. Composition selon la revendication 1 ou 2, **caractérisée en ce que** le résoi surcondensé est obtenu par condensation de phénol, de formaldéhyde et éventuellement d'urée, jusqu'à ce que le produit ait à pH environ 9 une diluabilité à l'eau à une température de 20 °C inférieure ou égale à 1500 %, notamment à 1000%.

4. Composition selon l'une quelconque des revendications 1 à 3, **caractérisée en ce qu'**elle a un taux de phénol libre inférieur ou égal à 0,2 %, notamment à 0,1 %.

5. Composition selon l'une des revendications 1 à 4, **caractérisée en ce qu'**elle a un pH de 7 à 10 lorsque le résol est neutralisé par l'acide borique ou un borate équivalent.

6. Procédé de préparation d'une composition résinique selon l'une quelconque des revendications 1 à 5, **caractérisé en ce qu'**il comprend une étape de surcondensation consistant à faire réagir en milieu basique du phénol, du formaldéhyde et éventuellement de l'urée, à une température comprise entre 50 et 80°C, de préférence 70°C, jusqu'à ce que le produit ait une diluabilité à l'eau à une température de 20°C inférieure ou égale à 2000 %, notamment 1500 %, voire 1000 % à pH environ 9, et inférieure à 500 % après neutralisation par l'acide sulfurique, suivie d'une étape de neutralisation par l'acide borique ou un borate équivalent, par l'acide sulfamique ou un sulfamate équivalent, ou par un système comprenant un acide et un émulsifiant, une étape de modification par de l'urée postérieurement à la surcondensation ayant lieu soit avant soit après l'étape de neutralisation.

7. Procédé selon la revendication 6, **caractérisé en ce que** le pH initial du résol obtenu en milieu basique est de 8,5 à 10.

8. Procédé selon la revendication 6 ou 7, **caractérisé en ce que** dans l'étape de surcondensation, on fait réagir le phénol et le formaldéhyde en présence d'un catalyseur basique dans un rapport molaire formaldéhyde/phénol de 2,5 à 4.

9. Procédé selon l'une des revendications 6 à 8, **caractérisé en ce que** la surcondensation est conduite jusqu'à l'obtention d'un taux de conversion du phénol égal ou supérieur à 98 %, de préférence à 99 %, tout particulièrement d'au moins 99,3 à 99,5 %.

10. Procédé selon l'une quelconque des revendications 6 à 9, **caractérisé en ce que** l'on met le phénol et le formaldéhyde en présence avec le catalyseur de polymérisation basique de préférence à une température de 20 à 60°C, et on les fait réagir à la température de réaction jusqu'au taux de conversion désiré.

11. Procédé selon la revendication 10, **caractérisé en ce que** la durée de la réaction est de 100 à 200 minutes.

12. Procédé selon l'une quelconque des revendications 6 à 9, **caractérisé en ce que** l'on met le phénol et le formaldéhyde en présence avec le catalyseur de polymérisation basique de préférence à une température de 20 à 60°C, et on les amène à une première température de réaction comprise entre 50 et 80°C, puis on élève la température du mélange à une deuxième température de réaction de 70 à 90°C, de préférence de 85°C, jusqu'au taux de conversion désiré.

13. Procédé selon la revendication 12, **caractérisé en ce que** la durée de la réaction à la première température de réaction est de 50 à 80 minutes, et la durée de la réaction à la deuxième température est de 30 à 60 minutes.

14. Procédé selon l'une quelconque des revendications 6 à 13, **caractérisé en ce que**, à l'étape de neutralisation, on ajoute de l'acide en quantité suffisante pour abaisser le pH à une valeur de 7 à 8.

15. Procédé selon l'une quelconque des revendications 6 à 14, **caractérisé en ce que** l'acide est introduit à raison de 0,88 à 0,92 mol d'acide par mol d'équivalents hydroxyle OH⁻ apportés par le catalyseur basique.

16. Procédé selon l'une quelconque des revendications 6 à 15, **caractérisé en ce que** dans l'étape de neutralisation on utilise l'acide borique ou le borate équivalent, ou l'acide sulfamique ou le sulfamate équivalent, en solution aqueuse, éventuellement additionnée d'une base.

17. Procédé selon l'une quelconque des revendications 6 à 16, **caractérisé en ce que**, à l'étape de neutralisation, on ajoute l'émulsifiant avant l'acide.

18. Procédé selon l'une quelconque des revendications 6 à 17, **caractérisé en ce qu'**il comprend une étape intermédiaire de stockage du produit de surcondensation en milieu basique, avant l'étape de neutralisation.

19. Composition d'encollage pour produit à base de laine minérale, comprenant une composition résinique selon l'une quelconque des revendications 1 à 5, et éventuellement de l'urée et/ou des additifs d'encollage.

## Claims

1. Resin composition based on a urea-modified phenolformaldehyde resol which has a formaldehyde/phenol ratio of 2 to 5, exhibiting a free formaldehyde content lower than or equal to 3% (by weight relative to the total weight of the composition), a free phenol content lower than or equal to 0.5% and a dilutability measured at 20°C of at least 1000%, **characterized in that** it contains an overcondensed resol, that is to say, obtained by condensation of phenol and, of formaldehyde and optionally of urea in basic medium until the product has a water dilutability at a temperature of 20°C at pH 9 lower than or equal to 2000% and lower than 500% after neutralization with sulphuric acid, in a form neutralized with boric acid or an equivalent borate, with sulphamic acid or an equivalent sulphamate, or with a system comprising an acid and an emulsifier.

2. Composition according to Claim 1, **characterized in that** it maintains a dilutability at 20°C of at least 1000% after 3 weeks' storage at 12°C.

3. Composition according to Claim 1 or 2, **characterized in that** the overcondensed resol is obtained by condensation of phenol, of formaldehyde and optionally of urea until the product has a water dilutability at approximately pH 9 at a temperature of 20°C, lower than or equal to 1500%, especially 1000%.

4. Composition according to any one of Claims 1 to 3, **characterized in that** it has a free phenol content lower than or equal to 0.2%, especially 0.1%.

5. Composition according to any one of Claims 1 to 4, **characterized in that** it has a pH of 7 to 10 when the resol is neutralized with boric acid or with an equivalent borate.

6. Process for the preparation of a resin composition according to any one of Claims 1 to 5, **characterized in that** it includes an overcondensation stage consisting in reacting phenol, formaldehyde and optionally urea in basic medium at a temperature between 50 and 80°C, preferably 70°C, until the product has a water dilutability at a temperature of 20°C, at approximately pH 9 lower than or equal to 2000%, especially 1500%, or even 1000%, and lower than 500% after neutralization with sulphuric acid, followed by a stage of neutralization with boric acid or an equivalent borate, with sulphamic acid or an equivalent sulphamate, or with a system comprising an acid and an emulsifier, a stage of modification by urea, subsequently to the overcondensation taking place either before or after the neutralization stage.

7. Process according to Claim 6, **characterized in that** the initial pH of the resol obtained in basic medium is 8.5 to 10.

8. Process according to Claim 6 or 7, **characterized in that** in the overcondensation stage the phenol and the formaldehyde are reacted in the presence of a basic catalyst in a formaldehyde/phenol molar ratio of 2.5 to 4.

9. Process according to one of Claims 6 to 8, **characterized in that** the overcondensation is conducted until a degree of conversion of phenol is obtained which is equal to or higher than 98%, preferably 99%, very particularly at least 99.3 to 99.5%.

10. Process according to any one of Claims 6 to 9, **characterized in that** the phenol and the formaldehyde are brought into contact with the basic polymerization catalyst preferably at a temperature of 20 to 60°C and are reacted at the reaction temperature up to the desired degree of conversion.

11. Process according to Claim 10, **characterized in that** the duration of the reaction is from 100 to 200 minutes.

12. Process according to any one of Claims 6 to 9, **characterized in that** the phenol and the formaldehyde are brought into contact with the basic polymerization catalyst preferably at a temperature of 20 to 60°C and are taken to a first reaction temperature, and then the temperature of the mixture is raised to a second reaction temperature of 70 to 90°C, preferably 85°C, up to the desired degree of conversion.

13. Process according to Claim 12, **characterized in that** the reaction period at the first temperature is from 50 to 80 minutes and the reaction period at the second temperature is from 30 to 60 minutes.

14. Process according to any one of Claims 6 to 13, **characterized in that**, at the neutralization stage acid is added in sufficient quantity to lower the pH to a value of 7 to 8.

15. Process according to any one of Claims 6 to 14, **characterized in that** the acid is introduced in a proportion of 0.88 to 0.92 mol of acid per mole of OH⁻ hydroxyl equivalents introduced by the basic catalyst.

16. Process according to any one of Claims 6 to 15, **characterized in that** boric acid or an equivalent borate, or sulphamic acid or an equivalent sulphamate, in aqueous solution, to which a base has optionally been added, is employed in the neutralization stage.

17. Process according to any one of Claims 6 to 16, **characterized in that**, at the neutralization stage an emulsifier is added before the acid.

18. Process according to any one of Claims 6 to 17, **characterized in that** it includes an intermediate stage of storage of the product of overcondensation in basic medium, before the neutralization stage.

19. Sizing composition for a mineral wool-based product, including a resin composition according to any one of Claims 1 to 5, and optionally urea and/or sizing additives.

## Patentansprüche

1. Harzzusammensetzung auf Basis eines Phenol-Formaldehyd-Resols, modifiziert durch Harnstoff mit einem Verhältnis von Formaldehyd/Phenol von 2 bis 5, umfassend einen Anteil an freiem Formaldehyd kleiner oder gleich 3 % (Gewichts-% im Verhältnis zu dem Gesamtgewicht der Zusammensetzung), einen Anteil an freiem Phenol kleiner oder gleich 0,5 %, und einer bei 20°C gemessenen Verdünnbarkeit von mindestens 1000 %, **dadurch gekennzeichnet, dass**
sie ein überkondensiertes Resol umfasst, d.h. erhalten durch Kondensierung von Phenol und Formaldehyd und gegebenenfalls Harnstoff im alkalischen Millieu, bis bei einer Temperatur von 20°C die Wasserverdünnbarkeit kleiner oder gleich 2000% bei einem pH von ca. 9 ist und nach Neutralisation mit Schwefelsäure, einer durch Borsäure oder Boratäquivalent, durch Sulfaminsäure oder Sulfamatäquivalent neutralisierten Form, oder durch ein System, das eine Säure und einen Emulgator enthält, kleiner als 500% ist.

2. Zusammensetzung gemäß Anspruch 1, **dadurch gekennzeichnet, dass** es nach 3-wöchiger Lagerung bei 12°C eine Verdünnbarkeit bei 20°C von wenigstens 1000% behält.

3. Zusammensetzung gemäß Anspruch 1 oder 2, **dadurch gekennzeichnet, dass** das überkondensierte Resol durch Kondensierung von Phenol, Formaldehyd und gegebenenfalls von Harnstoff erhalten wird, bis die Wasserverdünnbarkeit bei einer Temperatur von 20°C und einem pH-Wert von etwa 9 kleiner oder gleich 1500%, insbesondere 1000 %, beträgt.

4. Zusammensetzung gemäß einem der Ansprüche 1 bis 3, **dadurch gekennzeichnet, dass** sie einen Anteil an freiem Phenol kleiner oder gleich 0,2 %, insbesondere 0,1 %, aufweist.

5. Zusammensetzung gemäß einem der Ansprüche 1 bis 4, **dadurch gekennzeichnet, dass** sie einen pH-Wert von 7 bis 10 aufweist, bis das Resol durch Borsäure oder ein Boratäquivalent neutralisiert ist.

6. Verfahren zur Herstellung einer Harzzusammensetzung gemäß einem der Ansprüche 1 bis 5, **dadurch gekennzeichnet, dass** es einen Überkondensationsschritt umfasst, bei dem Phenol, Formaldehyd und gegebenenfalls Harnstoff in einem basischem Milieu bei einer Temperatur zwischen 50 und 80°C, vorzugsweise 70°C, umgesetzt werden, bis das Produkt eine Wasserverdünnbarkeit bei einer Temperatur von 20°C bei einem pH-Wert um 9 von kleiner oder gleich 2000%, insbesondere 1500%, vorzugsweise 1000% und weniger als 500% nach der Neutralisation mit Schwefelsäure aufweist, gefolgt von einem Neutralisationsschritt mit Borsäure oder einem Boratäquivalent, mit Sulfaminsäure oder einem Sulfamatäquivalent, oder mit einem System, das eine Säure und einen Emulgator enthält sowie einen Modifikationschritt durch Harnstoff im Anschluß an die Überkondensation, vor oder nach dem Neutralisationsschritt.

7. Verfahren gemäß Anspruch 6, **dadurch gekennzeichnet, dass** der anfängliche pH-Wert des Resols, der im basischen Milieu erhalten wird, im Bereich von 8,5 bis 10 liegt.

8. Verfahren gemäß Anspruch 6 oder 7, **dadurch gekennzeichnet, dass** das Phenol und das Formaldehyd in einem Überkondensierungsschritt in Gegenwart eines basischen Katalysators in einem Molverhältnis von Formaldehyd/Phenol von 2,5 bis 4 umgesetzt wird.

9. Verfahren gemäß einem der Ansprüche 6 bis 8, **dadurch gekennzeichnet, dass** die Überkondensierung bis zum Erreichen einer Umsetzungsrate von Phenol gleich oder größer 98%, bevorzugt 99%, besonders bevorzugt wenigstens 99,3 bis 99,5%, durchgeführt wird.

10. Verfahren gemäß einem der Ansprüche 6 bis 9, **dadurch gekennzeichnet, dass** das Phenol und das Formaldehyd mit dem basischen Polymerisationskatalysator bevorzugt bei einer Temperatur zwischen etwa 20 und 60°C in Kontakt gebracht wird, und man diese bei der Reaktionstemperatur reagieren lässt, bis die gewünschte Umsetzungsrate erreicht ist.

11. Verfahren gemäß Anspruch 10, **dadurch gekennzeichnet, dass** die Reaktionsdauer 100 bis 200 Minuten beträgt.

12. Verfahren gemäß einem der Ansprüche 6 bis 9, **dadurch gekennzeichnet, dass** das Phenol und das Formaldehyd mit dem basischen Polymerisationskatalysator bevorzugt bei einer Temperatur von 20 bis 60°C in Kontakt gebracht werden, und sie auf eine erste Reaktionstemperatur von 50 bis 80°C gebracht werden, und danach die Temperatur der Mischung bis zur gewünschten Umsetzungsrate auf eine zweite Reaktionstemperatur von 70 bis 90°C, bevorzugt 85°C, angehoben wird.

13. Verfahren gemäß Anspruch 12, **dadurch gekennzeichnet, dass** die Reaktionsdauer bei der ersten Reaktionstemperatur 50 bis 80 Minuten beträgt, und die Reaktionsdauer bei der zweiten Temperatur 30 bis 60 Minuten beträgt.

14. Verfahren gemäß einem der Ansprüche 6 bis 13, **dadurch gekennzeichnet, dass** während des Neutralisationsschrittes die Säure in einer Menge zugefügt wird, die ausreicht, um den pH-Wert auf einen Wert von 7 bis 8 zu senken.

15. Verfahren,gemäß einem der Ansprüche 6 bis 14, **dadurch gekennzeichnet, dass** die Säure in einem Verhältnis von 0,88 bis 0,92 Mol Säure pro Mol Hydroxyäquivalenten OH⁻, die durch den basischen Katalysator geliefert werden, eingebracht wird.

16. Verfahren gemäß einem der Ansprüche 6 bis 15, **dadurch gekennzeichnet, dass** für den Neutralisationsschritt Borsäure oder Boratäquivalent oder Sulfaminsäure oder Sulfamatäquivalent in wässriger Lösung, gegebenenfalls unter Zugabe einer Base, verwendet werden.

17. Verfahren gemäß einem der Ansprüche 6 bis 16, **dadurch gekennzeichnet, dass** beim Neutralisationsschritt ein Emulgator vor der Säure zugegeben wird.

18. Verfahren gemäß einem der Ansprüche 6 bis 17, **dadurch gekennzeichnet, dass** es einen Zwischenschritt umfasst, bei dem das Überkondensationsprodukt vor dem Neutralisationsschritt in basischem Milieu gelagert wird.

19. Encollagezusammensetzung für Produkte auf Basis von Mineralwolle, umfassend eine Harzzusammensetzung gemäß einem der Ansprüche 1 bis 5, und ggf. Harnstoff und/oder Encollageadditive.
